# EUROPEAN PATENT APPLICATION

(11) **EP 3 470 771 A1**
(43) Date of publication of application: **17.04.2019**
(21) Application number: 17810035.0
(22) Date of filing: 10.05.2017
(51) Int. Cl.: G01B 11/00, G02B 27/18, G03B 35/00

(54) **MARKER**

(30) Priority: 09.06.2016 JP 2016115484
(71) Applicant: Enplas Corporation, Kawaguchi-shi, Saitama 332-0034 (JP)
(72) Inventor: SAITO, Tomohiro, Saitama 332-0034 (JP)
(74) Representative: Epping - Hermann - Fischer
(86) International application number: PCT/JP2017/017700
(87) International publication number: WO 2017/212853

(57) **Abstract**

The marker according to the present invention comprises: a first surface which includes a plurality of convex surfaces; and a second surface. The second surface includes a plurality of first areas and a plurality of second areas, wherein the interval between the centers of the plurality of first areas is greater than the interval between the apexes of the plurality of convex surfaces. The plurality of first areas are arranged farther from the convex surfaces than a focal position of the plurality of convex surfaces. When external parallel light is made incident on the convex surfaces in an upper-lower direction, the width with respect to the first direction of a light bundle formed by the convex surfaces at a height at which the first areas are arranged is not more than the width with respect to the first direction of the first areas.

## Description

### Technical Field

The present invention relates to a marker.

### Background Art

In recent years, in the fields of Augmented Reality (AR), robotics and the like, an image indicator using a combination of a lens and a mark has been used as a marker for recognizing the position, orientation and the like of an object (see, for example, PTL 1).

PTL 1 discloses a marker including a lenticular sheet including a plurality of cylindrical lenses (convex surfaces) disposed side by side, and an image formation layer including images corresponding to the cylindrical lenses. Each cylindrical lens is formed such that the focal point is located on the image. When the marker is viewed from the cylindrical lens side, the images of the marks move in association with the viewing position.

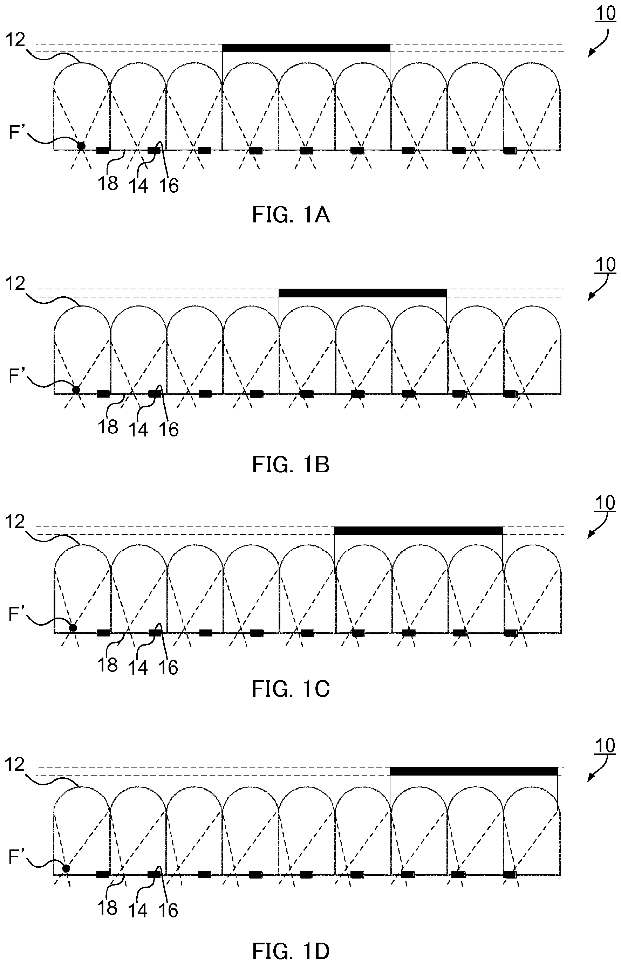

FIGS. 1A to 1D schematically illustrate how a black collective image is viewed as the viewing angle of marker 10 of PTL 1 is changed. As illustrated in FIG. 1, in marker 10 disclosed in PTL 1, a plurality of cylindrical lenses 12 are formed such that focal point F' of each cylindrical lens 12 is located at the same height as that of surface 16 of detection object part (first region) 14. In this case, in marker 10 disclosed in PTL 1, the boundary between the image of detection object part 14 and the image of region (second region) 18 other than detection object part 14 is clearly discriminated regardless of the viewing angle as illustrated in FIG. 1. In addition, in marker 10 disclosed in PTL 1, the images of a plurality of detection object parts (first regions) 14 are viewed as one collective image.

### Citation List

### Patent Literature

PTL 1
Japanese Patent Application Laid-Open No. 2013-025043

### Summary of Invention

### Technical Problem

However, in marker 10 disclosed in PTL 1, it is difficult to set the positions of focal points F' of cylindrical lenses 12 at the same height as surface 16 detection object part 14 in all manufactured markers 10 when manufacturing errors and the like are taken into consideration. Even in a single marker 10, it is difficult to set the positions of all focal points F' of a plurality of cylindrical lenses 12 and surface 16 of detection object part 14 at the same height. When the heights of focal points F' of cylindrical lens 12 and surfaces 16 of detection object parts 14 are shifted in marker 10 disclosed in PTL 1, the boundary between the image of detection object part (first region) 14 and the image of region (second region) 18 other than detection object part 14 might be unclear depending on the viewing angle. In addition, the images of detection object parts (first regions) 14 are separated from one another, and might not be viewed as a single collective image.

In view of this, an object of the present invention is to provide a marker in which the boundary between an image of a first region and an image of a second region can be clearly differentiated, and images of a plurality of the first regions can be viewed as a single collective image regardless of the viewing angle even in the case where focal points of a plurality of convex surfaces are not located at the same height of the respective surfaces of the detection object parts.

### Solution to Problem

A marker according to an embodiment of the present invention is formed of an optically transparent material, the marker including: a first surface including a plurality of convex surfaces disposed along at least a first direction; and a second surface disposed opposite to the first surface in a front-rear direction of the marker, and configured to be projected on the plurality of convex surfaces as an optically detectable image. The second surface includes a plurality of first regions and a plurality of second regions which are optically discriminable from each other, an interval between vertices of the plurality of convex surfaces in the first direction is greater than a center-to-center distance between each of the plurality of first regions in the first direction, the plurality of first regions are disposed at positions further from the plurality of convex surfaces than focal point positions of the plurality of convex surfaces, and when parallel light is incident on each of the plurality of convex surfaces from outside along the front-rear direction, a width of a light flux formed at a height of the first region by each of the plurality of convex surfaces in the first direction is equal to or smaller than a width of the first region in the first direction.

In addition, a marker according to an embodiment of the present invention is formed of an optically transparent material, the marker including: a first surface including a plurality of convex surfaces disposed along at least a first direction; and a second surface disposed opposite to the first surface in a front-rear direction of the marker, and configured to be projected on the plurality of convex surfaces as an optically detectable image. The second surface includes a plurality of first regions and a plurality of second regions which are optically discriminable from each other. An interval between vertices of the plurality of convex surfaces in the first direction is smaller than a center-to-center distance between each of the plurality of first regions in the first direction, the plurality of first regions are disposed at locations closer to the plurality of convex surfaces than focal point positions of the plurality of convex surfaces, and when parallel light is incident on each of the plurality of convex surfaces from outside along the front-rear direction, a width of a light flux formed at a height of the first region by each of the plurality of convex surfaces in the first direction is equal to or smaller than a width of the first region in the first direction.

### Advantageous Effects of Invention

According to the present invention, it is possible to provide a marker in which the boundary between an image of a first region and an image of a second region can be clearly differentiated, and images of a plurality of the first regions can be viewed as a single collective image regardless of the viewing angle even in the case where the positions of the focal points of convex surfaces are shifted due to manufacturing errors and the like.

### Brief Description of Drawings

FIGS. 1A to 1D schematically illustrate how a black collective image is viewed as the viewing angle is changed in a marker of PTL 1;
FIGS. 2A and 2B illustrate a configuration of a marker according to Embodiment 1 of the present invention;
FIGS. 3A to 3D schematically illustrate how a black collective image is viewed as the viewing angle is changed in a marker according to comparative example 1;
FIGS. 4A to 4D schematically illustrate how a black collective image is viewed as the viewing angle is changed in a marker according to Embodiment 1;
FIGS. 5A and 5B illustrate a configuration of a marker according to Embodiment 2;
FIGS. 6A to 6D schematically illustrate how a black collective image is viewed as the viewing angle is changed in a marker according to comparative example 2;
FIGS. 7A to 7D schematically illustrate how a black collective image is viewed as the viewing angle is changed in the marker according to Embodiment 2;
FIGS. 8A to 8C illustrate a configuration of a marker according to Embodiment 3 of the present invention;
FIGS. 9A to 9C illustrate a configuration of a marker according to Embodiment 4 of the present invention;
FIGS. 10A to 10D illustrate a configuration of a marker according to Embodiment 5 of the present invention;
FIGS. 11A to 11D illustrate a configuration of a marker according to Embodiment 6 of the present invention; and
FIGS. 12A to 12D illustrate a configuration of a marker according to Embodiment 7 of the present invention.

### Description of Embodiments

A marker according to embodiments of the present invention is described below with reference to the accompanying drawings.

### Embodiment 1

### Configuration of marker

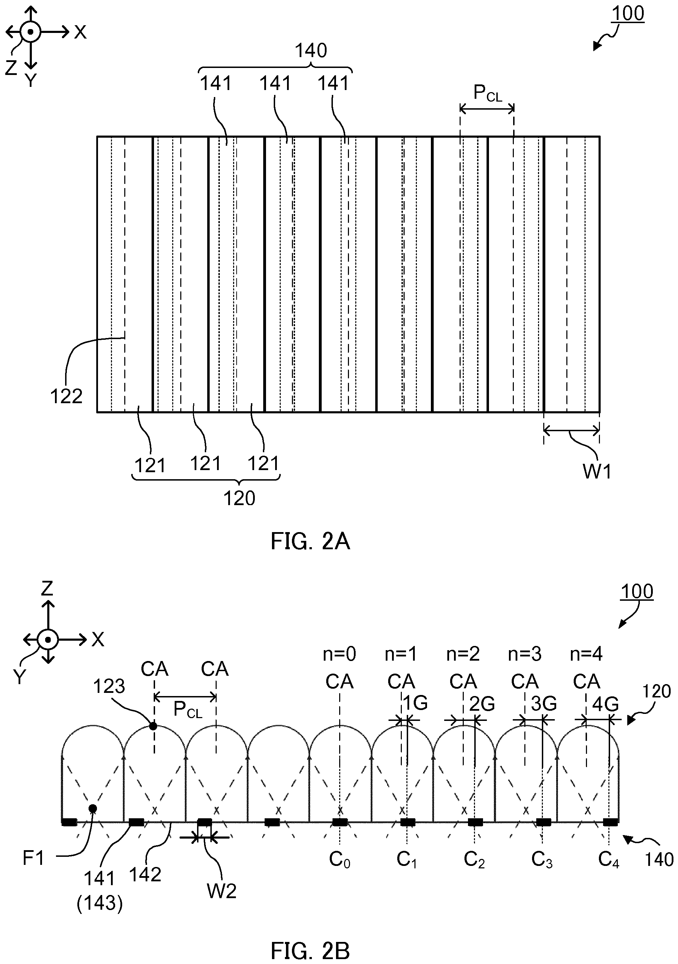

FIGS. 2A and 2B illustrate a configuration of marker 100 according to Embodiment 1 of the present invention. FIG. 2A is a plan view of marker 100 according to Embodiment 1 of the present invention, and FIG. 2B is a front view of marker 100.

As illustrated in FIGS. 2A and 2B, marker 100 includes front surface (first surface) 120 and rear surface (second surface) 140. The material of marker 100 is not limited as long as the material is optically transparent. Examples of the material of marker 100 include transparent resins such as polycarbonate, acrylic resin, cycloolefin polymer (COP), and cycloolefin copolymer (COC); and glass. In the present embodiment, the material of marker 100 is cycloolefin copolymer (COC) having a refractive index of 1.54. Front surface 120 includes a plurality of cylindrical convex surfaces 121. In addition, rear surface 140 includes a plurality of first regions (detection object parts) 141 and a plurality of second regions (reflection parts) 142. First region 141 and second region 142 can be discriminated from each other. Preferably, first region 141 and second region 142 are located at different heights.

Here, the term "can be discriminated from each other" means that first region 141 and second region 142 have a clear difference in their optical characteristics. The term "optical characteristics" means, for example, the degrees of the color such as brightness, saturation and hue, or the optical intensity such as luminance. The difference may be appropriately set in accordance with the use of marker 100, and may be a difference which can be visually checked, or a difference which can be confirmed with an optical detection apparatus, for example. In addition, the above-mentioned difference may be a difference which can be directly detected from first region 141 and second region 142, or a difference which can be detected through an additional operation such as irradiation of an UV lamp as in the case where at least one of first region 141 and second region 142 is a transparent film that emits fluorescence, for example.

Convex surfaces 121 are arranged along a first direction (in FIG. 2, the X direction). Each convex surface 121 extends in a third direction (in FIG. 2, the Y direction) perpendicular to the first direction (the X direction) and the height direction of marker 100 (a front-rear direction; a second direction; in FIG. 2, the Z direction). Each convex surface 121 is a curved surface having a curvature only in the first direction (the X direction), and includes ridgeline 122 linearly extending in the third direction (the Y direction). That is, marker 100 according to the present embodiment has a lenticular structure. In addition, in the cross-section in the height direction (the Z direction) of marker 100 along the first direction (the X direction), ridgeline 122 and vertex 123 coincide each other. In the present embodiment, two adjacent convex surfaces 121 of the plurality of convex surfaces 121 are disposed with no gap therebetween.

Convex surfaces 121 have the same size. For example, width W1 (the length in the first direction) of each convex surface 121 is 440 µm, and pitch P_{CL} of convex surfaces 121 is 440 µm. The term "pitch of convex surfaces 121" is a distance between each ridgeline 122 (vertex 123 or central axis CA) of convex surface 121 in the first direction. In addition, in the present embodiment, the pitch of convex surfaces 121 may be the length (width) of convex surface 121 in the first direction (the X direction). The term "central axis CA of convex surface 121" is a straight line which passes through the center of convex surface 121 and extends along the second direction (the Z direction) perpendicular to the first direction (the X direction) and the third direction (the Y direction) in plan view of convex surface 121. In addition, the term "vertex 123 of convex surface 121" is a location of ridgeline 122 in the cross-section in the height direction (the Z direction) of marker 100 along the first direction (the X direction). That is, in the present embodiment, vertex 123 of convex surface 121 is the intersection of convex surface 121 and central axis CA in the cross section including central axis CA.

In the cross-section in the height direction (the Z direction) of marker 100 along the first direction (the X direction), the cross-sectional shape of each convex surface 121 is an arc or a curve. In the present embodiment, the cross-sectional shape of each convex surface 121 in the above-mentioned cross-section is an arc having a curvature radius of 0.25 mm. In addition, in the present embodiment, focal point F1 of convex surface 121 is located between convex surface 121 and a virtual plane passing through the plurality of first regions 141. In other words, first region 141 is further from (or is located at a position remoter from) front surface (first surface) 120 than focal point F1 of convex surface 121.

As viewed from front surface (first surface) 120, parallel light incident on each convex surface 121 comes into focal point F1 at a position on the front surface 120 side relative to first region 141. At this time, in the case where parallel light is incident on convex surface 121 from the outside along the height direction (front-rear direction), the width of the light flux formed at the height of first region 141 by convex surface 121 in the first direction (the X direction) is equal to or smaller than the width of first region 141 in the first direction (the X direction). Note that, in the present embodiment, the width of the light flux formed by convex surface 121 is equal to the width of first region 141.

First regions 141 are disposed opposite to respective convex surfaces 121, and are projected onto respective convex surfaces 121 in the form of optically detectable images. In plan view of marker 100, first region 141 extends along the third direction (the Y direction). The configuration of first regions 141 is not limited as long as first regions 141 are projected onto respective convex surfaces 121 in the form of optically detectable images as described above. First region 141 may be a recess or a protrusion. In the present embodiment, first region 141 is a recess. The shape of the recess is not limited as long as the recess has a predetermined width in plan view of marker 100. In addition, coating film 143 formed by applying a coating material may be disposed in the recess. In the present embodiment, in plan view, first region 141 has a rectangular shape elongated in the third direction (the Y direction). The "center of first region 141" means the middle point of first region 141 in the first direction (the X direction) and the middle point of first region 141 in the third direction (the Y direction).

In addition, the depth of the recess that serves as first region 141 is not limited as long as a desired function (indication of images) can be ensured. The range of the height of the protrusion that serves as first region 141 may be 5 to 100 µm. In the present embodiment, the depth of the recess that serves as first region 141 is 10 µm, for example. Length (width) W2 of the recess that serves as first region 141 in the first direction (the X direction) is 45 µm, for example. The smaller the width W2 of first region 141 with respect to P_{CL}, the higher the contrast of the image appearing on convex surface 121 side tends to be. The larger the width W2 of first region 141 with respect to P_{CL}, the easier the production of first region 141. Preferably, the ratio of width W2 of first region 141 to pitch P_{CL}(W2/P_{CL}) is 1/200 to 1/5 in view of obtaining a sufficiently clear image.

First region 141 is disposed at a position where the image of first region 141 is located at a center portion of convex surface 121 when marker 100 is viewed from front surface 120 side at the center of convex surface 121 in the first direction (the X direction) and the third direction (the Y direction).

For example, in the first direction (the X direction), first region 141 corresponding to convex surface 121 located at the center of front surface 120 (in FIG. 2B, convex surface 121 of n=0) is disposed at a position where center Co thereof overlaps central axis CA of the convex surface 121 of n=0.

In the present embodiment, the center-to-center distance (|Cₙ-Cₙ₋₁|) of first regions 141 corresponding to adjacent two convex surfaces 121 in the first direction (the X direction) is represented by P_{CL}+nG (µm). As described above, P_{CL} represents the distance between vertices 123 of adjacent two convex surfaces 121. In addition, G represents a predetermined distance (e.g. 8 µm) in the first direction (the X direction) for ensuring the optical effect of images. Further, n represents an order of a certain convex surface 121 with respect to 0th convex surface 121 located at the center in the first direction (the X direction).

With this configuration, first regions 141 corresponding to convex surfaces 121 other than the center (n=0) convex surface 121 are disposed at positions further from the center (n=0) convex surface 121 with respect to central axes CA of respective convex surfaces 121 in the first direction (the X direction). That is, in the present embodiment, the center-to-center distance of first regions 141 adjacent to each other in the first direction (the X direction) (the pitch of the first regions) is greater than the distance between vertices 123 of convex surface 121 adjacent to each other in the first direction (the X direction) (the pitch of convex surfaces 121).

In the present embodiment, coating film 143 is formed in first region 141. Coating film 143 is a solidified black liquid coating material, for example.

Coating film 143 is produced by applying and solidifying a coating material. The black liquid coating material has fluidity, and is a liquid composition or powder. The method of applying or solidifying the coating material may be appropriately selected from publicly known methods in accordance with the coating material. Examples of the application method of the black liquid coating material include spray coating and screen printing. Examples of the solidification method of the black liquid coating material include drying of a black liquid coating material, curing of a curable composition (such as radical polymerizable compound) in a black liquid coating material, and baking of powder.

Coating film 143 forms an optically discriminable portion. The term "optically discriminable" means that coating film 143 and another portion are clearly different in their optical characteristics. The term "optical characteristics" means, for example, the degrees of the color such as brightness, saturation and hue, or the optical intensity such as luminance. The difference may be appropriately set in accordance with the use of marker 100, and may be a difference which can be visually checked, or a difference which can be confirmed with an optical detection apparatus, for example. In addition, the difference may be a difference which can be directly detected from coating film 143, or a difference which can be detected through an additional operation such as irradiation of an UV lamp as in the case where coating film 143 is a transparent film that emits fluorescence, for example.

When marker 100 is placed on a white object, light incident on first region 141 through convex surface 121 is absorbed by coating film 143. On the other hand, light incident on each convex surface 121 which reaches second region 142 is reflected by the surface thereof and returned to convex surface 121. As a result, an image of a line of a color (black) of coating film 143 is projected on convex surface 121 with a white background.

Since first regions 141 are appropriately disposed in accordance with their distances from the center of marker 100 in the first direction, a black collective image of black line images is viewed when marker 100 is viewed from front surface 120 side.

For example, when marker 100 is viewed from the center in the first direction (the X direction), the black collective image is viewed at a center portion in the first direction. When marker 100 is viewed at a different angle with respect to the first direction (the X direction), the collective image is viewed at a different position in the first direction depending on the viewing angle. That is, the viewing angle of marker 100 is determined based on the position of the collective image in the first direction (the X direction).

Marker 100 according to the present embodiment functions when the plurality of first regions 141 are projected on the plurality of convex surfaces 121 arranged in the first direction (the X direction). That is, it is preferable that the images of black lines be viewed as a continuous black collective image when marker 100 is viewed from a predetermined position. Important factors for observing the images of black lines as a continuous black collective image are the distance between vertices 123 of convex surfaces 121 in the first direction (the X direction), the center-to-center distance of first regions 141 in the first direction (the X direction), the position of first region 141 (focal point F1 of convex surface 121), and the relationship between the width of the light flux formed at the height of first region 141 by convex surface 121 in the first direction (the X direction) and the width of first region 141.

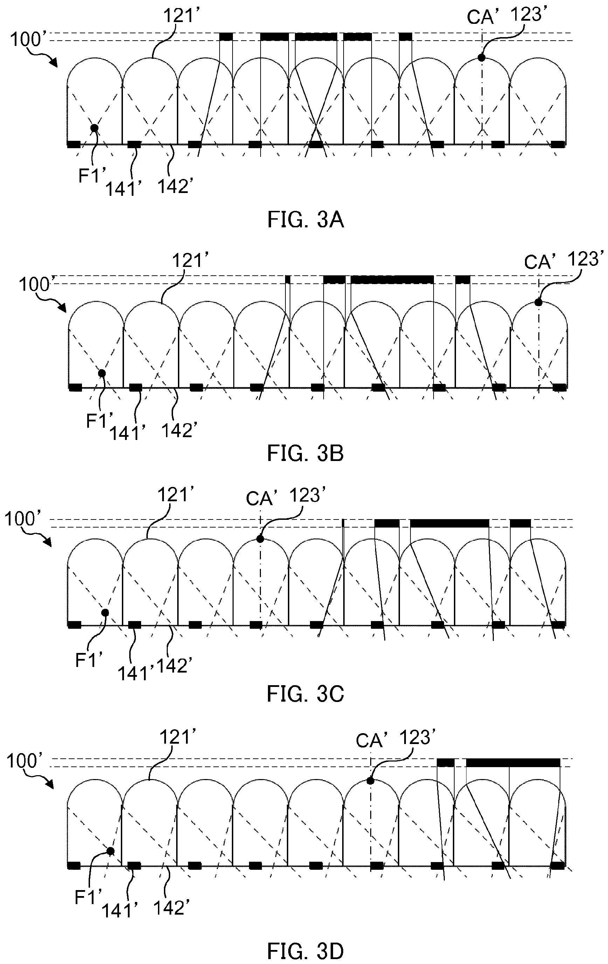

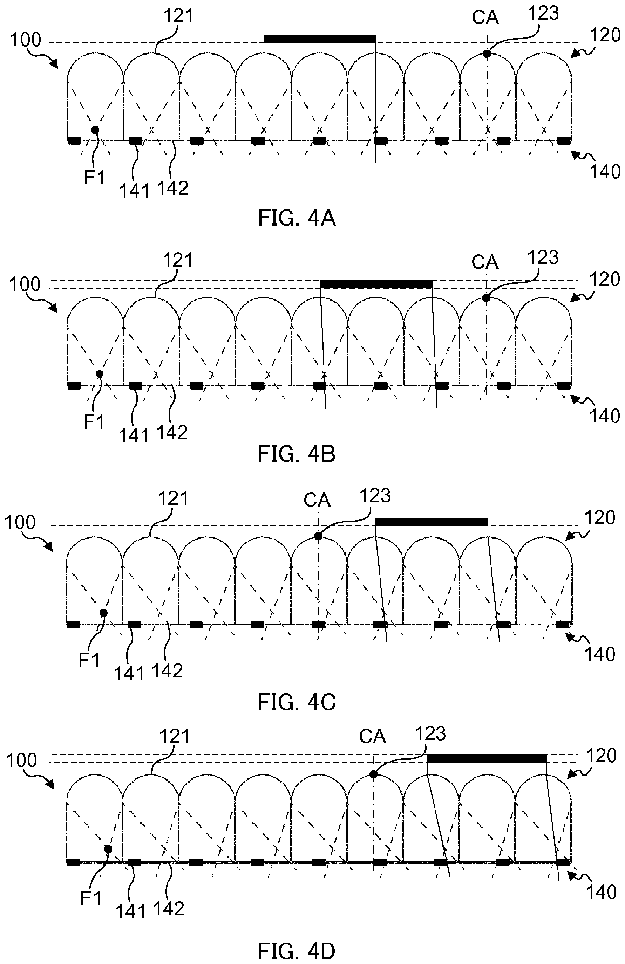

Now the relationship between the width of first region 141 and the width of the light flux formed by convex surface 121 in the first direction (the X direction) is described. FIGS. 3A to 3D schematically illustrate how a black collective image is viewed as the viewing angle is changed in marker 100' in which the center-to-center distance of first regions 141' in the first direction (the X direction) is greater than the interval between vertices 123', and first region 141' is disposed at a position further from convex surface 121' than the position of focal point (F1') of convex surface 121', and further, the width of the light flux formed at the height of first region 141'by convex surface 121' in the first direction (the X direction) is greater than the width of first region 141' in the first direction (the X direction). FIGS. 4A to 4D schematically illustrate how a black collective image is viewed as the viewing angle is changed marker 100 according to Embodiment 1. In FIGS. 3A to 4D, it is assumed that the viewing angle increases to the plus side as the position is shifted toward the right side, and the viewing angle increases to the minus side as the position is shifted toward the left side with respect to the viewing angle 0°, which is the extending direction of central axes CA and CA' of convex surfaces 121 and 121'. FIGS. 3A to 4D illustrate how a black collective image is viewed as the viewing angle is gradually increased to the minus side from the viewing angle 0°.

As illustrated in FIGS. 3A to 3D, regarding the movement direction of the images of the plurality of first regions 141' (the black collective image) in marker 100' in which the center-to-center distance of first regions 141' is greater than the interval between vertices 123', and first region 141' is disposed at a position further from convex surface 121' than the position of focal point (F1') of convex surface 121', and further, the width of the light flux formed at the height of first region 141' by convex surface 121' is greater than the width of first region 141', the images of the plurality of first regions 141' appear to move from the center to the right side in the drawing as the viewing angle is increased from 0° to the minus side (from the center to the left in the drawing). That is, in marker 100', the black collective image moves away from the viewing object. In addition, regarding the appearance of the images of the plurality of first regions 141' in marker 100', the images of the plurality of first regions 141' are not viewed as one collective image. In other words, a non-black region is present between first region 141' viewed in a certain convex surface 121' and first region 141' viewed in another convex surface 121' adjacent to the certain convex surface 121'. The reason for this is that a part of second region 142' is projected on convex surface 121'. In addition, it is recognized that since first region 141' is disposed at a position further from convex surface 121' than the position of focal point (F1') of convex surface 121', first region 141' and second region 142' are inverted in the first direction (the X direction) and projected on convex surface 121'. Further, it is recognized that since the width of the light flux formed by convex surface 121' is greater than the width of first region 141' at the height of first region 141', a non-black region is formed between first regions 141' viewed in convex surfaces 121' adjacent to each other.

On the other hand, as illustrated in FIGS. 4A to 4D, regarding the movement direction of the images (the black collective image) of the plurality of first regions 141 in marker 100 according to the present embodiment, as the viewing angle is increased from the viewing angle 0° to the minus side (from the center to the left in the drawing), the images (the black collective image) of the plurality of first regions 141 appear to move from the center to the right side in the drawing. That is, in the marker 100, the black collective image moves away from the viewing object. In addition, regarding the appearance of the images of the plurality of first regions 141 in the marker 100, the images of the plurality of first regions 141 are viewed as one collective image. In addition, in marker 100 according to the present embodiment, a part of second region 142 is projected on convex surface 121 in some situation as in marker 100' illustrated in FIG. 3. Even in such a case, in the marker 100, a part of second region 142 is projected on adjacent convex surface 121 located on the outer side (second region 142 side) in the first direction (the X direction), since the center-to-center distance of first regions 141 is greater than the distance between vertices 123 of convex surfaces 121, and first region 141 is located at a position further from convex surface 121 than the focal point of convex surface 121, and further, the width of the light flux formed at the height of first region 141 by convex surface 121 is equal to or smaller than the width of first region 141. As a result, in marker 100 according to Embodiment 1, the images of first regions 141 is viewed as one image. Further, the contrast of first region 141 and second region 142 is high.

### Effect

As described above, in marker 100 according to the present embodiment, the focal point position of each convex surface 121 is not located on first region 141, but the boundary between first region 141 and second region 142 can be clearly differentiated, and the images of the plurality of first regions 141 can be viewed as one image regardless of the viewing angle. Accordingly, even in the case where the focal point positions of the plurality of convex surfaces 121 are shifted due to manufacturing errors, the boundary between first region 141 and second region 142 can be clearly differentiated, and the images of the plurality of first regions 141 can be viewed as a single collective image regardless of the viewing angle.

### Embodiment 2

Marker 200 according to Embodiment 2 is different from marker 100 according to Embodiment 1 only in the distance between vertices 223 of convex surfaces 221 and the center-to-center distance of first regions 241, the position of first region 241 (focal point F2 of convex surface 221), and the relationship between the width of the light flux formed at the height of first region 241 by convex surface 221 and the width of first region 241. In view of this, the configurations similar to those of light emitting device 100 according to Embodiment 1 are denoted with the same reference numerals, and the description thereof is omitted.

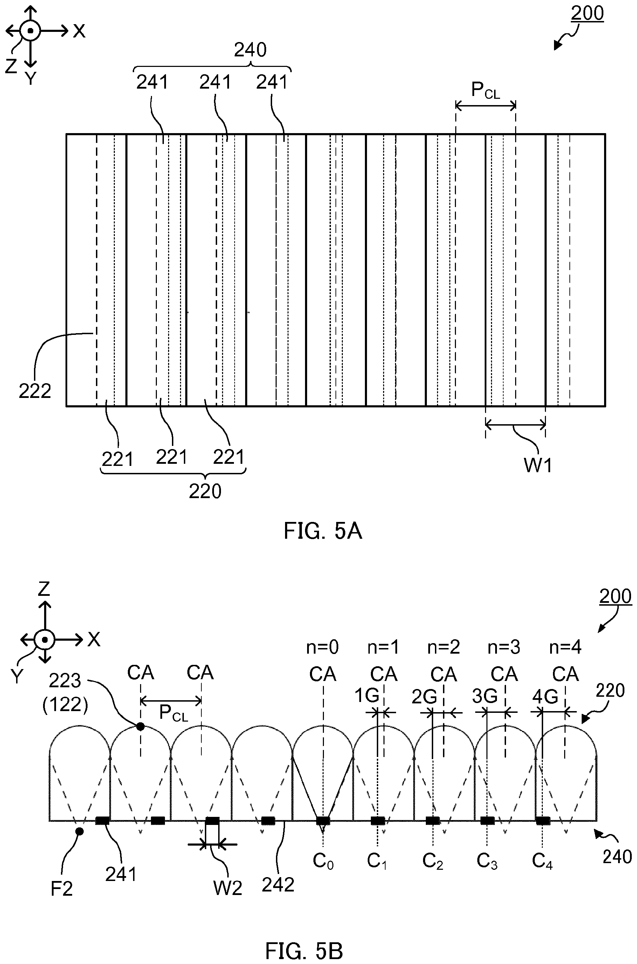

FIGS. 5A and 5B illustrate a configuration of marker 200 according to Embodiment 2 of the present invention. FIG. 5A is a plan view of marker 200 according to Embodiment 2 of the present invention, and FIG. 5B is a front view of marker 200. As illustrated in FIG. 5A and FIG. 5B, marker 200 according to Embodiment 2 includes first surface 220 and second surface 240. First surface 220 includes a plurality of convex surfaces 221. In addition, second surface 240 includes a plurality of first regions 241 and a plurality of second regions 242.

In the present embodiment, in the cross-section in the height direction (the Z direction) of marker 200 along the first direction (the X direction), the cross-sectional shape of each convex surface 221 is an arc. To be more specific, in the present embodiment, the cross-sectional shape of convex surface 221 is a shape whose curvature radius gradually increases as the distance from central axis CA (ridgeline 222) increases. In addition, as viewed from convex surface 221 side, focal point F2 is located at a position further from convex surface 221 than a virtual plane including the plurality of first regions 241. In other words, first region 241 is closer to convex surface 221 than the focal point position of convex surface 221.

First region 241 is disposed at a position where the image of first region 241 is located at a center portion of convex surface 221 when marker 200 is viewed from surface 220 side at the center of convex surface 221 in the first direction (the X direction) and in the third direction (the Y direction).

For example, in the first direction (the X direction), first region 241 corresponding to convex surface 221 located at the center of front surface 220 (in FIG. 5B, convex surface 221 of n=0) is disposed at a position where center Co thereof overlaps central axis CA of the convex surface 221 of n=0.

In the present embodiment, the center-to-center distance (|Cₙ-Cₙ₋₁|) of first regions 241 corresponding to two convex surfaces 221 adjacent to each other in the first direction (the X direction) is represented by P_{CL}-nG(µm). As described above, P_{CL} represents the distance between vertices 223 of convex surfaces 221 adjacent to each other. In addition, G represents a predetermined distance (e.g. 8 µm) in the first direction for ensuring the optical effect of images. Further, n represents an order of a certain convex surface 221 with respect to 0th convex surface 221 located at the center in the first direction (the X direction).

With this configuration, first regions 241 corresponding to convex surfaces 221 located at respective distances from the center (n=0) convex surface 221 are located on the center (n=0) convex surface 221 side relative to central axes CA of respective convex surfaces 221 in the first direction (the X direction). That is, in the present embodiment, the center-to-center distance of first regions 241 adjacent to each other is smaller than the distance between vertices 223 of convex surfaces 221 adjacent to each other (the pitch of convex surfaces 122).

In addition, when parallel light is incident on convex surface 221 from the outside along the height direction (front-rear direction), the width of the light flux formed at the height of first region 241 by convex surface 221 in the first direction (the X direction) is equal to or smaller than the width of first region 241 in the first direction (the X direction). Note that, in the present embodiment, the width of the light flux formed by convex surface 221 is equal to the width of first region 241.

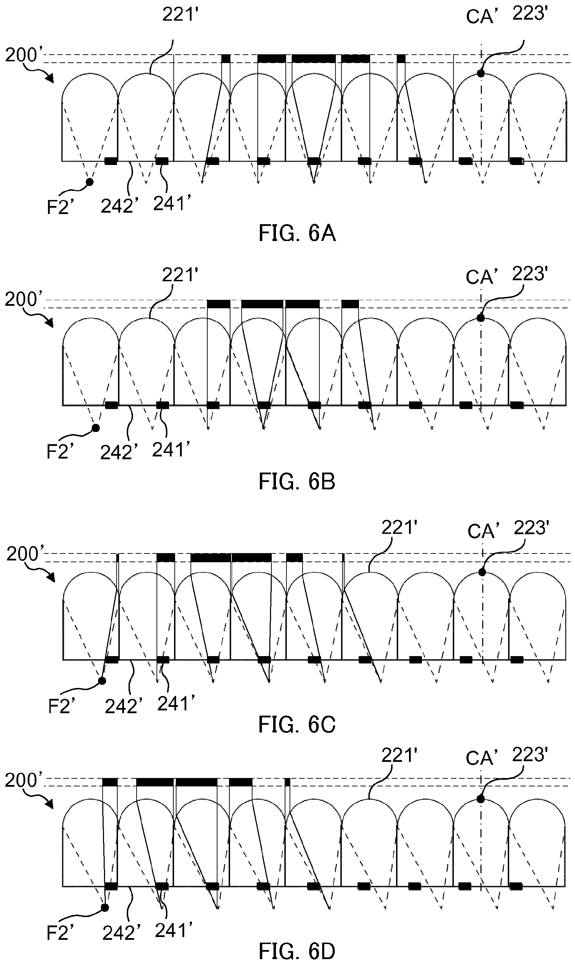

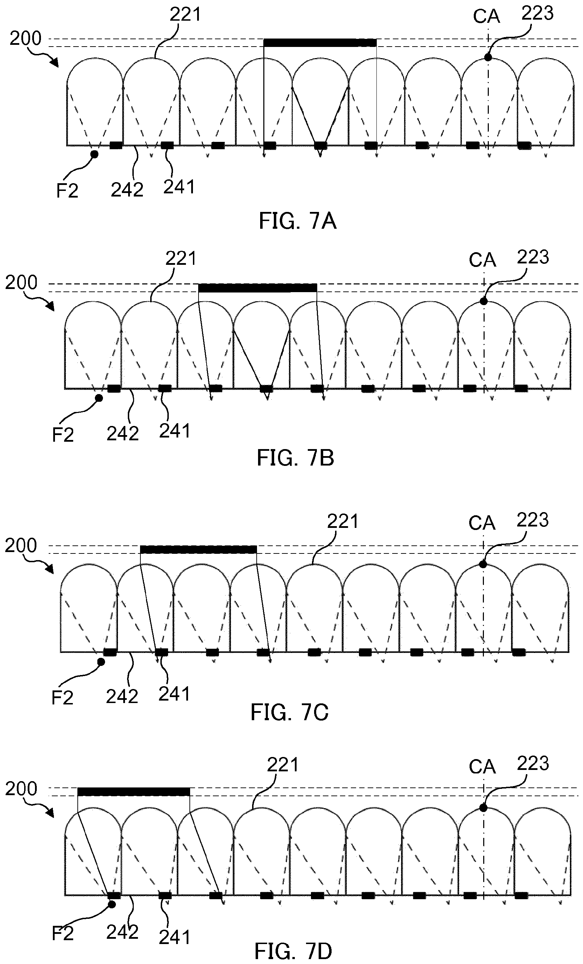

Next, the relationship between the width of first region 141 and the width of the light flux formed by convex surface 221 in the first direction (the X direction) is described. FIGS. 6A to 6D schematically illustrate how a black collective image is viewed as the viewing angle is changed in marker 200' in which the center-to-center distance of first regions 241' is smaller than the interval of vertices 223' in the first direction (the X direction), and first region 241' is located at a position closer to convex surface 221' than the focal point (F2') of convex surface 221', and further, the width of the light flux formed at the height of first region 141' by convex surface 221' in the first direction (the X direction) is greater than the width of first region 241' in the first direction (the X direction). FIGS. 7A to 7D schematically illustrate how a black collective image is viewed as the viewing angle is changed in marker 200 according to Embodiment 2. In FIGS. 6A to 7D, it is assumed that the viewing angle increases to the plus side as the position is shifted toward the right side, and the viewing angle increases to the minus side as the position is shifted toward the left side with respect to the viewing angle 0°, which is the extending direction of central axes CA and CA' of convex surfaces 221 and 221'. FIGS. 6A to 7D illustrate how a black collective image is viewed as the viewing angle is gradually increased to the minus side from the viewing angle 0°.

As illustrated in FIGS. 6A to 6D, regarding the movement direction of the images of the plurality of first regions 241' (the black collective image) in marker 200' in which the center-to-center distance of first regions 241' is smaller than the interval between vertices 223', and first region 241' is disposed at a position closer to convex surface 221' than the position of focal point (F2') of convex surface 221', and further, the width of the light flux formed at the height of first region 241' by convex surface 221' is greater than the width of first region 241', the images of the plurality of first regions 241' appear to move from the center to the right side in the drawing as the viewing angle is increased from 0° to the minus side (from the center to the left in the drawing). That is, in marker 200', the black collective image moves away from the viewing object. In addition, regarding the appearance of the images of the plurality of first regions 241' in marker 200', the images of the plurality of first regions 241' are not viewed as one collective image. In other words, a non-black region is present between first region 241' viewed in a certain convex surface 221' and first region 241' viewed in another convex surface 221' adjacent to the certain convex surface 221'. The reason for this is that a part of second region 242' is projected on convex surface 221'. It is recognized that, since first region 241' is disposed at a position closer to convex surface 221' than the position of focal point (F2') of convex surface 221', first region 241' and second region 242' are projected on convex surface 221' without being inverted in the first direction (the X direction). Further, it is recognized that since the width of the light flux formed by convex surface 221' is greater than the width of first region 241' at the height of first region 241', a non-black region is formed between first regions 241' viewed in convex surfaces 221' adjacent to each other.

On the other hand, as illustrated in FIGS. 7A to 7D, regarding the movement direction of the images (the black collective image) of the plurality of first regions 241 in marker 200 according to the present embodiment, as the viewing angle is increased from the viewing angle 0° to the minus side (from the center to the left in the drawing), the images (the black collective image) of the plurality of first regions 241 appear to move from the center to the left side in the drawing. That is, the black collective image moves toward the viewing object. In addition, regarding the appearance of the images of the plurality of first regions 241 in the marker 200 according to Embodiment 2, the images of the plurality of first regions 241 are viewed as one collective image. In addition, in marker 200 according to the present embodiment, a part of second region 242 is projected on convex surface 221. However, in marker 200 according to Embodiment 2, since first region 241 is located at a position closer to convex surface 221 than the focal point (F2) position of convex surface 221, a part of second region 242 is projected on adjacent convex surface 221 located on the center side in first direction (the X direction). Further, since the width of the light flux formed at the height of first region 241 by convex surface 221 is equal to or smaller than the width of first region 241, the images of first regions 241 are viewed as one image in marker 200 according to Embodiment 2.

### Effect

With the above-mentioned configuration, marker 200 according to the present embodiment provides an effect similar to marker 100 of Embodiment 1.

### Embodiment 3

The configuration of marker 300 according to Embodiment 3 differs from the configuration of marker 200 according to Embodiment 2 in shapes of convex surface 321, first region 341, and second region 342. In view of this, the configurations similar to those of marker 200 according to Embodiment 2 are denoted with the same reference numerals, and the description thereof is omitted.

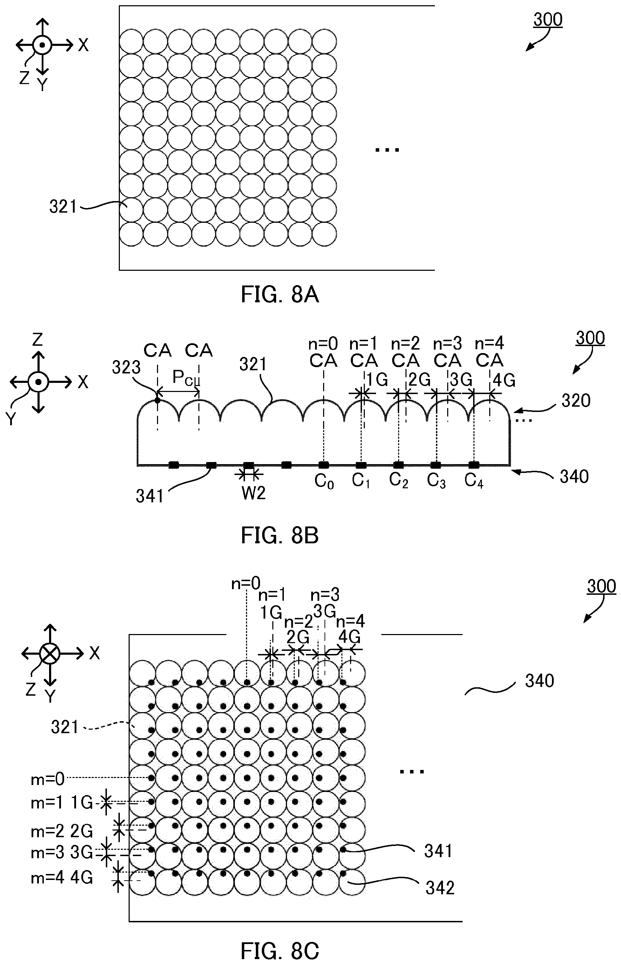

FIGS. 8A to 8C illustrate a configuration of marker 300 according to Embodiment 3 of the present invention. FIG. 8A is a plan view of marker 300 according to Embodiment 3 of the present invention, and FIG. 8B is a partially enlarged sectional view in which hatching is omitted, and FIG. 8C is a bottom view.

As illustrated in FIGS. 8A to 8C, marker 300 according to Embodiment 3 includes first surface 320 and second surface 340. First surface 320 includes a plurality of convex surfaces 321. In addition, second surface 340 includes a plurality of first regions 341, and a plurality of second regions 342.

In plan view, convex surfaces 321 have circular shapes, and the same size. For example, the diameter of the shape of convex surface 321 in plan view is 440 µm, and pitch P_{CL} of convex surfaces 321 is 440 µm in the first direction (the X direction) and the third direction (the Y direction). The term "pitch of convex surfaces 321" means a distance between the centers (vertices 323 or central axes CA) of convex surfaces 321 adjacent to each other. In addition, the term "central axis CA of convex surface 321" means a straight line that passes through the center of convex surface 321, and extends along the second direction (the Z direction) in plan view of convex surface 321. Further, the term "vertex 323 of convex surface 321" is an intersection of convex surface 321 and central axis CA.

In a cross section of marker 300 in the height direction (the Z direction), each convex surface 321 has a substantially semicircular shape. That is, since central axis CA of convex surface 321 is a straight line that is parallel to the second direction (the Z direction), convex surface 321 is a substantially hemispherical surface. That is, convex surface 321 is rotationally symmetrical about central axis CA as the rotation axis. In addition, focal point F3 of convex surface 321 as viewed from convex surface 321 is located at a position farther than first region 341. In other words, first region (detection object part) 341 is disposed on convex surface 321 side relative to the focal point of front surface (first surface) 320.

In addition, marker 300 includes first region 341 disposed at a position corresponding to each convex surface 321 on the rear surface side of marker 300. For example, in plan view, first region 341 has a circular shape with a diameter of 45 µm and a depth of 10 µm.

The center-to-center distance (|Cₙ-Cₙ₋₁|) of first regions 341 adjacent to each other in the first direction (the X direction) is P_{CL}-nGµm, and the center-to-center distance (|Cₘ-Cₘ₋₁|) of first regions 341 adjacent to each other in the third direction (the Y direction) is P_{CL}-mG µm. The "n" represents an order of a certain convex surface 321 with respect to 0th convex surface 321 in the first direction (the X direction). The "m" represents an order of a certain convex surface 321 with respect to 0th convex surface 321 in the third direction (the Y direction).

As described above, first regions 341 corresponding to convex surfaces 321 located at respective distances from the center (n=0) convex surface 321 in the first direction (the X direction) are located on the center (n=0) convex surface 321 side relative to central axes CA of respective convex surfaces 321 in the first direction (the X direction). In addition, first regions 341 corresponding to convex surfaces 321 located at respective distances from the center (m=0) convex surface 321 in third direction (the Y direction) are located on the center (n=0) convex surface 321 side relative to central axes CA of respective convex surfaces 321 in the third direction (the Y direction). That is, in the present embodiment, in the first direction (the X direction) and the third direction (the Y direction), the center-to-center distance of first regions 341 adjacent to each other is smaller than the distance between vertices 323 of convex surfaces 321 adjacent to each other. In addition, also in the present embodiment, at the height of first region 341 in a cross section including the first direction (the X direction) and the height direction (the Z direction), the width of the light flux formed by convex surface 321 is equal to or smaller than the width of first region 341.

Although not illustrated in the drawings, also in marker 300 according to the present embodiment, when the observation angle is changed, the image of first region 341 is observed in the form of one image.

With the above-mentioned configuration, marker 300 according to the present embodiment provides an effect similar to that of marker 100 of Embodiment 1.

### Embodiment 4

Marker 400 according to Embodiment 4 is different from marker 300 according to Embodiment 3 only in the shape of convex surface 421. In view of this, the configurations similar to those of marker 300 according to Embodiment 3 are denoted with the same reference numerals, and the description thereof is omitted.

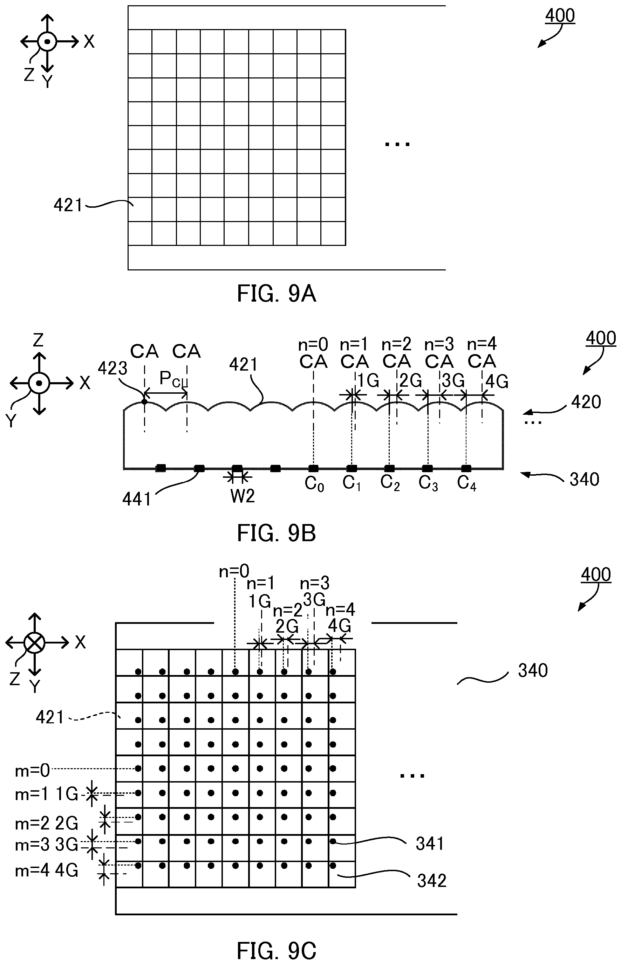

FIGS. 9A to 9C illustrate a configuration of marker 4 according to Embodiment 400 of the present invention. FIG. 9A is a plan view of marker 400 according to Embodiment 4 of the present invention, FIG. 9B is a partially enlarged sectional view in which hatching is omitted, and FIG. 9C is a bottom view.

As illustrated in FIG. 9A to 9C, marker 400 according to Embodiment 4 includes first surface 420 and second surface 340. First surface 420 includes a plurality of convex surfaces 421. In addition, second surface 340 includes a plurality of first regions 341, and second region 342.

Each convex surface 421 has a square shape in plan view, and convex surfaces 421 have the same size. For example, each side of the shape of convex surface 421 in plan view is 440 µm, and pitch P_{CL} of convex surfaces 421 is 440 µm in the first direction and the third direction. The term "pitch of convex surfaces 421" means a distance between the centers (vertices 423 or central axes CA) of convex surfaces 421 adjacent to each other. In addition, the term "central axis CA of convex surface 421" means a straight line that passes through the center of convex surface 421, and extends along the second direction in plan view of convex surface 421. Further, the term "vertex 423 of convex surface 421" is an intersection of convex surface 421 and central axis CA.

In the cross-section in the height direction (the Z direction) of marker 400, each convex surface 421 is a curve whose curvature radius increases as the distance from vertex 423 increases. Here, the curvature radius may continuously increase or intermittently increase as the distance from vertex 423 increases.

The center-to-center distance (|Cₙ-Cₙ₋₁|) of first regions 341 adjacent to each other in the first direction (the X direction) and the third direction (the Y direction) is P_{CL}-nGµm, and the center-to-center distance (|Cₘ-Cₘ₋₁|) of first regions 341 adjacent to each other in the second direction is P_{CL}-mG µm. As described above, n represents an order of a certain convex surface 421 in the first direction with respect to 0th convex surface 421. The "m" represents an order of a certain convex surface 421 in the second direction with respect to 0th convex surface 421.

As described above, first regions 341 corresponding to convex surfaces 421 located at respective distances from the center (n=0) convex surface 421 in the first direction (the X direction) are located on the center (n=0) convex surface 421 side relative to central axes CA of respective convex surfaces 421 in the first direction (the X direction). In addition, first regions 341 corresponding to convex surfaces 421 located at respective distances from the center (m=0) convex surface 421 in third direction (the Y direction) are located on the inner side relative to central axes CA of respective convex surfaces 421 in the third direction (the Y direction). That is, in the present embodiment, in the first direction (the X direction) and the third direction (the Y direction), the distance between vertices 423 of convex surfaces 421 adjacent to each other is greater than the center-to-center distance of first regions 341 adjacent to each other. In addition, also in the present embodiment, at the height of first region 341 in the cross section including the first direction and the height direction, the width or diameter of the light flux formed by convex surface 421 is equal to or smaller the width of first region 341.

Also in marker 400 according to the present embodiment, when the viewing angle changed, the image of first region 341 is viewed as one image although not illustrated in the drawings.

### Effect

With the above-mentioned configuration, marker 400 according to the present embodiment provides an effect similar to that of marker 300 of Embodiment 3.

Note that, while the center-to-center distance of first regions 341 and 421 adjacent to each other is smaller than the interval between vertices 342 and 423 of convex surfaces 341 and 421 adjacent to each other in Embodiments 3 and 4, the center-to-center distance of first regions 341 adjacent to each other may be greater than the interval between vertices 342 and 423 of convex surfaces 341 and 421 adjacent to each other. In this case, the plurality of first regions 341 are closer to convex surfaces 321 and 421 than the focal point positions of the plurality of convex surfaces 321 and 421.

### Embodiment 5

Marker 700 according to Embodiment 5 differs from marker 600 according to Embodiment 6 only in second surface 140. In view of this, the configurations similar to those of marker 400 according to Embodiment 4 are denoted with the same reference numerals, and the description thereof is omitted.

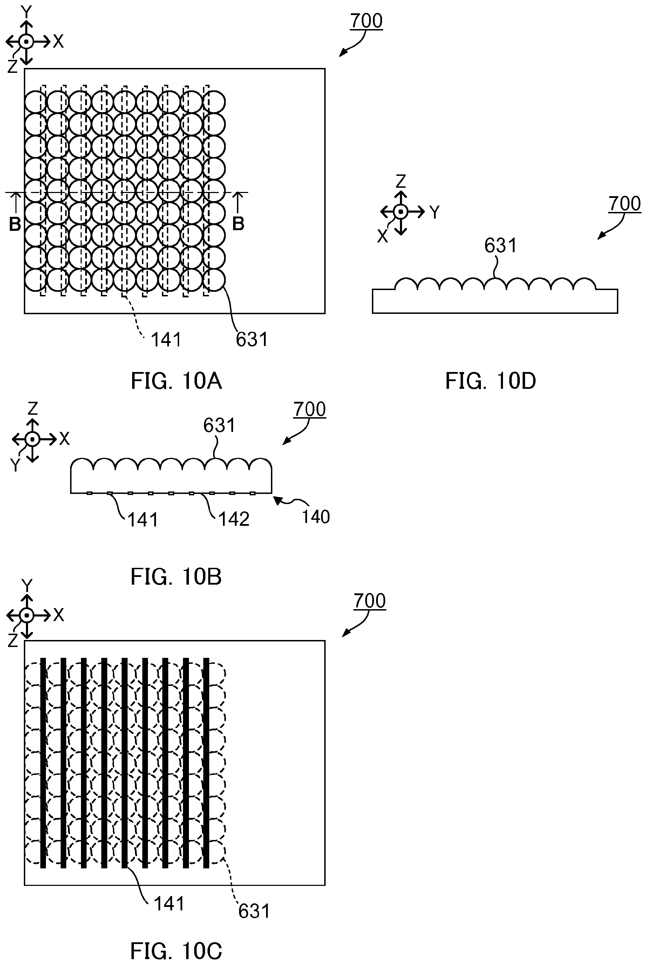

FIG. 10A is a plan view of marker 700, FIG. 10B is a sectional view of a part of marker 700 taken along line B-B of FIG. 10A in which hatching is omitted, FIG. 10C is a bottom view of marker 700, and FIG. 10D is a side view of marker 700.

Second surface 140 is similar to that of Embodiment 1. Specifically, second surface 140 includes first region 141 and second region 142. First region 141 is a slender rectangular recess extending along the Y direction in the XY plane, and is disposed across convex surface parts 631 arranged along the Y direction. In addition, second regions 142 are arranged in the X direction in such a manner as to correspond to the lines of convex surface part 631.

In marker 700, a linear image along the Y direction is observed as a group of images projected on convex surface parts 631. This image appears such that the image approaches the viewer as marker 700 is tilted to the viewer side with respect to the X direction.

### Effect

In marker 700 according to the present embodiment, convex surface part 631 is curved not only in the X direction, but also in the Y direction, and thus the contrast of the image in the Y direction is high.

### Embodiment 6

Marker 800 according to Embodiment 6 differs from marker 700 according to Embodiment 5 only in configuration of convex surface part 831. In view of this, the configurations similar to those of marker 700 according to Embodiment 5 are denoted with the same reference numerals, and the description thereof is omitted.

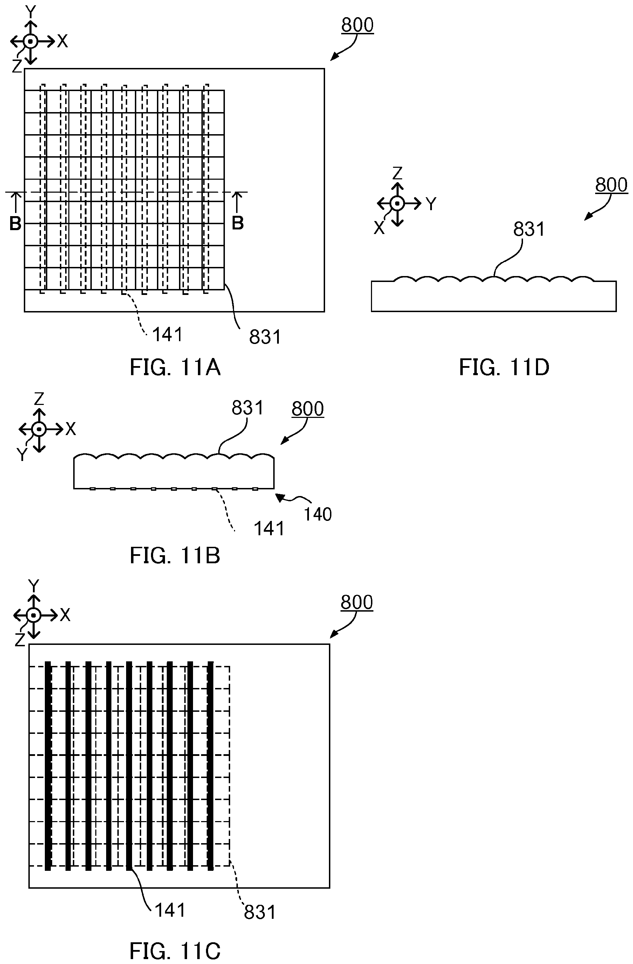

FIG. 11A is a plan view of marker 800, FIG. 11B is a sectional view of a part of marker 800 taken along line B-B of FIG. 11A in which hatching is omitted, FIG. 11C is a bottom view of marker 800, and FIG. 11D is a side view of marker 800.

In Embodiment 6, convex surface part 831 has a square planar shape. In addition, for example, the shape of convex surface part 831 in a cross section along the optical axis of convex surface part 831 is represented by a curve whose curvature radius increases as the distance from the vertex of convex surface part 831 increases.

### Effect

In addition to an effect similar to that of marker 700 according to Embodiment 5, with marker 800 according to the present embodiment, the image is clearly detected regardless of the intensity of the light incident on the first surface of the lenticular lens part. One possible reason for this is that, practically, the first surface of marker 800 is composed only of convex surface part 631 (curved surface) and includes no flat surface part, and thus reflection light at the first surface is less likely to be generated or is weak in comparison with marker 700 although, in the case where the intensity of the incident light is high, the intensity of the reflection light of marker 800 such as the reflection light on the first surface is also high, and the visibility of the image might be reduced.

### Embodiment 7

Marker 900 according to Embodiment 7 is different from marker 700 according to Embodiment 5 only in configuration of convex surface part 931. In view of this, the configurations similar to those of marker 700 according to Embodiment 5 are denoted with the same reference numerals, and the description thereof is omitted.

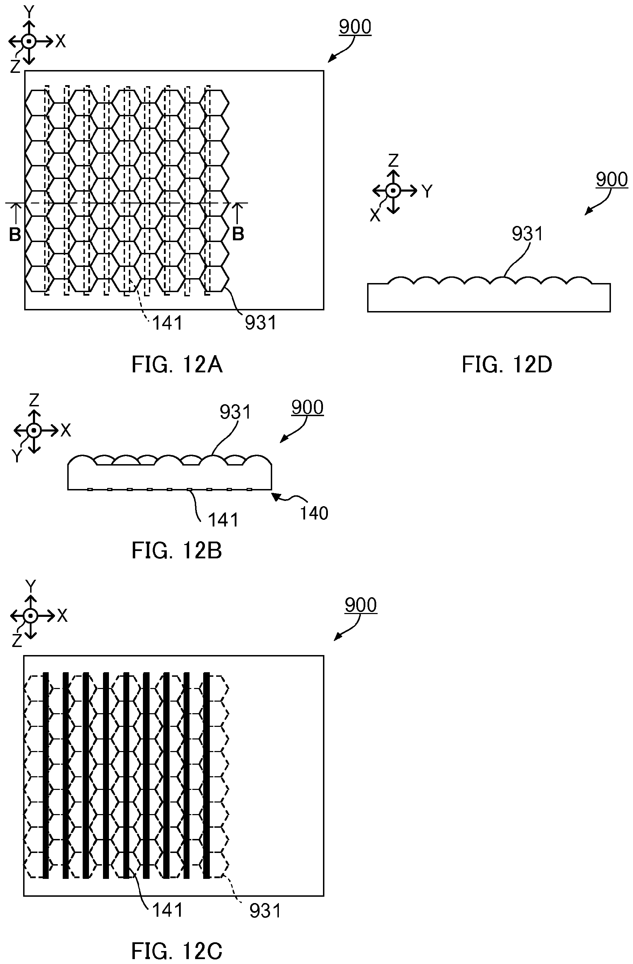

FIG. 12A is a plan view of marker 900, FIG. 12B is a sectional view of a part of marker 900 taken along line B-B of FIG. 12A in which hatching is omitted, FIG. 12C is a bottom view of marker 900, and FIG. 12D is a side view of marker 900.

In Embodiment 9, convex surface part 931 has a regular-hexagon planar shape. In addition, for example, in a cross section along the optical axis, convex surface part 931 is represented by a curve whose curvature radius increases as the distance from the vertex of convex surface part 931 increases. Regarding the line of convex surface parts 931 in the Y direction, convex surface parts 931 are arranged along the Y direction such that their opposed sides are in contact with one another. In addition, the lines of convex surface parts 931 are arranged in the X direction such that each connecting part of convex surface parts 73 of one line is in contact with a corner of the hexagon of one convex surface part 931 of another line. In this manner, in marker 900, convex surface parts 931 are fully closely arranged in a collective manner over the entirety of the first surface.

### Effect

Marker 900 according to the present embodiment provides an effect similar to that of marker 800 according to Embodiment 6.

Note that, in Embodiments 5 to 7, the center-to-center distance of first regions 141 adjacent to each other may be smaller than the interval between vertices of convex surfaces 831 and 931 adjacent to each other, or may be greater than the interval between vertices of convex surfaces 831 and 931 adjacent to each other. In the case where the center-to-center distance of first regions 141 adjacent to each other is smaller than the interval between the vertices of convex surfaces 831 and 931 adjacent to each other, the plurality of first regions 141 are located at positions further from convex surface 141 than the focal point positions of the plurality of convex surfaces 831 and 931. In addition, in the case where the center-to-center distance of first regions 141 adjacent to each other is greater than the interval between the vertices of convex surfaces 831 and 931 adjacent to each other, the plurality of first regions 141 are located at positions closer to convex surface 141 than the focal point positions of the plurality of convex surfaces 831 and 931.

This application is entitled to and claims the benefit of Japanese Patent Application No. 2016-115484 filed on June 9, 2016, the disclosure each of which including the specification, drawings and abstract is incorporated herein by reference in its entirety.

### Industrial Applicability

The marker according to the present invention is useful as a position detecting marker (or an angle detecting marker) for recognizing the position, orientation and the like of an object. Accordingly, the present invention is expected to contribute to development of the technical fields of the above-mentioned marker.

### Reference Signs List

100, 100', 200, 200', 300, 400, 700, 800, 900 Marker
120, 220, 320, 420 First surface
121, 121', 221, 221', 321, 421, 831, 931 Convex surface
122 Ridgeline
123, 123', 223, 223', 323, 423 Vertex
140, 240, 340, 440, 540 Second surface
141, 141', 241, 241', 341 Detection object part
142, 142', 242, 242', 342 Reflection part
143 Coating film
F', F1, F1', F2, F2' Focal point
CA Central axis

## Claims

1. A marker formed of an optically transparent material, the marker comprising:
a first surface including a plurality of convex surfaces disposed along at least a first direction; and
a second surface disposed opposite to the first surface in a front-rear direction of the marker, and configured to be projected on the plurality of convex surfaces as an optically detectable image,
wherein the second surface includes a plurality of first regions and a plurality of second regions which are optically discriminable from each other,
wherein an interval between vertices of the plurality of convex surfaces in the first direction is greater than a center-to-center distance between each of the plurality of first regions in the first direction,
wherein the plurality of first regions are disposed at positions further from the plurality of convex surfaces than focal point positions of the plurality of convex surfaces, and
wherein when parallel light is incident on each of the plurality of convex surfaces from outside along the front-rear direction, a width of a light flux formed at a height of each of the plurality of first regions by each of the plurality of convex surfaces in the first direction is equal to or smaller than a width of each of the plurality of first regions in the first direction.

2. A marker formed of an optically transparent material, the marker comprising:
a first surface including a plurality of convex surfaces disposed along at least a first direction; and
a second surface disposed opposite to the first surface in a front-rear direction of the marker, and configured to be projected on the plurality of convex surfaces as an optically detectable image,
wherein the second surface includes a plurality of first regions and a plurality of second regions which are optically discriminable from each other,
wherein an interval between vertices of the plurality of convex surfaces in the first direction is smaller than a center-to-center distance between each of the plurality of first regions in the first direction,
wherein the plurality of first regions are disposed at locations closer to the plurality of convex surfaces than focal point positions of the plurality of convex surfaces, and
wherein when parallel light is incident on each of the plurality of convex surfaces from outside along the front-rear direction, a width of a light flux formed at a height of each of the plurality of first regions by each of the plurality of convex surfaces in the first direction is equal to or smaller than a width of each of the plurality of first regions in the first direction.

3. The marker according to claim 1 or 2, wherein the plurality of first regions and the plurality of second regions are disposed at different heights.

4. The marker according to any one of claims 1 to 3, wherein each of the plurality of convex surfaces includes a linear ridgeline extending in a direction orthogonal to the first direction and the front-rear direction.

5. The marker according to any one of claims 1 to 3, wherein each of the plurality of convex surfaces is rotationally symmetrical about an axis extending along the front-rear direction.
